# EUROPÄISCHE PATENTSCHRIFT

(11) **EP 2 378 895 B1**
(45) Veröffentlichungstag und Bekanntmachung des Hinweises auf die Patenterteilung: **07.12.2016**
(21) Anmeldenummer: 09806171.6
(22) Anmeldetag: 21.12.2009
(51) Int. Cl.: A23J 3/08

(54) **VERFAHREN UND VORRICHTUNG ZUR HERSTELLUNG EINES PRODUKTES DURCH MIKROGELIERUNG UND/ODER MIKROPARTIKULIERUNG EINES ANSATZES**
METHOD AND APPARATUS FOR PRODUCING A PRODUCT BY MICRO-GELLING AND/OR MICRO-PARTICULATING A BATCH
PROCÉDÉ ET DISPOSITIF PERMETTANT DE FABRIQUER UN PRODUIT PAR MICROGÉLIFICATION ET/OU PAR MICROPARTICULATION D'UNE MATIÈRE DE DÉPART

(30) Priorität: 22.12.2008 DE 102008064203
(43) Veröffentlichungstag der Anmeldung: 26.10.2011
(73) Patentinhaber: Burger, Martin, 70180 Stuttgart (DE)
(72) Erfinder: Burger, Martin, 70180 Stuttgart (DE)
(74) Vertreter: Kohler Schmid Möbus Patentanwälte
(86) Internationale Anmeldenummer: PCT/DE2009/001780
(87) Internationale Veröffentlichungsnummer: WO 2010/072203

(56) Entgegenhaltungen:
- WO-A1-2008/063115
- DE-A1-102004 041 770

## Beschreibung

Die Erfindung betrifft ein Verfahren zur Herstellung eines Produktes durch Mikrogelierung und/oder Mikropartikulierung eines Molkenproteine beinhaltenden Ansatzes, insbesondere eine Mikropartikulierung von Filtrationsretentaten sowie eine Vorrichtung zur Durchführung des Verfahrens.

Dabei wird eine kombinierte thermische und mechanische Behandlung sowie optional eine weitere Wärmebehandlung von Proteinkonzentraten wie z. B. Filtrationsretentaten, insbesondere von Molkenproteinen in Ultrafiltrationsmolkenkonzentraten durchgeführt.

Ziel des Mikropartikulierens ist es, Filtrationsretentate, wie z.B. Molkenproteinpartikel in einem Größenbereich von wenigen Mikrometern herzustellen. Dies wird erreicht durch eine Kombination von hitzeinduzierter Denaturierung und Aggregation der Molkenproteine unter kontinuierlicher mechanischer Behandlung, wie z.B. Scherung der Partikel. Man nutzt also die Überlagerung der beiden entgegenwirkenden Vorgänge Aggregation und Partikelzerteilung für den Partikulierungsprozess aus, um eine bestimmte Größenverteilung der Partikel zu erhalten.

Durch die Mikropartikulierung kann das Filtrationsretentat, d.h. ein z.B. ein Molkenproteinaggregat den spezifischen Anforderungen für verschiedenartige Produkte angepasst werden. Beispielsweise können Molkenproteine in Form von Aggregaten im Größenbereich weniger Mikrometer in eine Käsematrix integriert werden. Bei Anwendung des Verfahrens zur Käseherstellung wird beispielsweise die Produktausbeute aus dem Milchrohstoff erhöht und die Textureigenschaften, insbesondere von fettreduzierten Käsen als Produkt, werden verbessert.

Auch bei der Herstellung von Frischkäse kann eine deutliche Ausbeuteerhöhung erzielt werden. Die durch Mikropartikulierung erhaltenen Aggregate in einem bestimmten, möglichst engen Größenbereich, können beispielsweise auch bei der Herstellung von Milchdesserts oder Eiscreme in analoger Weise verwendet werden. Bei diesen Produkten spielt insbesondere der Zuckergehalt der zu behandelnden Lösung eine entscheidende Rolle auf die Ausbildung des Gels. Auch die Anwendung als Ersatz für die konventionelle Joghurtmilcherhitzung oder die Kesselmilcherhitzung für beispielsweise Quark ist ein Anwendungsgebiet für Produkte mit natürlichen oder nur leicht erhöhten Molkeproteinwerten.

Eine Vorrichtung zur Mikropartikulierung ist beispielsweise bekannt aus der Dissertationsschrift "Thermische Denaturierung und Aggregation von Molkenproteinen in Ultrafiltrationsmolkenkonzentraten - Reaktionskinetik und Partikulieren im Schabewärmetauscher -", erschienen im Shaker Verlag unter ISBN 3-8265-6233-X im Jahre 1999.
Bei der durch diese Dissertationsschrift vorbekannten Vorrichtung zur Mikropartikulierung wird sowohl der Wärmebehandlungsvorgang als auch der Vorgang der mechanischen Bearbeitung, das heißt, der mechanischen Zerkleinerung, der Teilchen in ein und demselben Apparat gleichzeitig in gekoppelter Weise durchgeführt. Dabei wird ein Schabewärmetauscher eingesetzt, in dem Molkenproteine aus einem Ultrafiltrationsmolkenkonzentrat eingeleitet werden. In dem Schabewärmetauscher wird das Ultrafiltrationsmolkenkonzentrat einerseits durch eine Wärmeübertrag an einer Wärmeübertragungsfläche, also einem Wärmetauscher, des Schabewärmetauschers erwärmt. Auf der anderen Seite erzeugen innerhalb des Schabewärmetauschers umlaufende Schaber eine Scherkraft, wodurch eine mechanische Zerkleinerung der Partikel aus dem Ultrafiltrationsmolkenkonzentrat erreicht wird. Schabewärmetauscher sind auch in der Scherrate physikalisch begrenzt.

Bei Schabewärmetauschern zur Mikropartikulierung ist der Prozess des Erwärmens, durch welchen eine Aggregatbildung der Partikel hervorgerufen wird, unmittelbar gekoppelt mit dem Vorgang des mechanischen Zerkleinerns der Partikel. So kann der Wärmeübertrag auf das Filtrationsretentat nur durch Erhöhen der Umlauffrequenz der Schaber variiert werden, was jedoch unvermeidlich auch zu einer Änderung der mechanischen Zerkleinerungswirkung führt. Somit können die gegenläufigen Vorgänge der durch Wärmebehandlung hervorgerufenen Aggregation und der durch mechanische Scherbeanspruchung hervorgerufenen Zerkleinerung nicht als unabhängige Parameter des Prozesses beeinflusst werden. Dies hat den Nachteil, dass es bei Schabewärmetauschern nur begrenzt möglich ist, Partikel in einem vorgewählten und engen Größenbereich herzustellen. Zur Erzeugung von Partikeln in besonders kleinen Größenbereichen von wenigen Mikrometern muss der Rotor mit den Schabern mit sehr hoher Rotationsgeschwindigkeit betrieben werden. Dies hat den Nachteil, dass die Abnutzung des Schabewärmetauschers besonders groß ist. Des Weiteren führt der Betrieb bei hoher Umlaufgeschwindigkeit zu einem erhöhten Energieverbrauch. Außerdem haben die bekannten Anlagen ein sehr großes Volumen, so dass die Aufheizung und Denaturierung aufgrund der unterschiedlichen Aufheiz- und Agglomerierungszeiten typischerweise zu Heißhaltezeiten des Produktes zwischen 30s und 120s führt.

Zur Verbesserung der Mikropartikulierung wird in der WO 2006/024395 A1 vorgeschlagen in einer Vorrichtung zur Mikropartikulierung von Filtrationsretentaten mit einem Schabewärmetauscher nach dem Durchlaufen des Schabewärmetauschers das Produkt durch einen Homogenisator durchzuleiten und so eine zusätzliche, von dem Schabewärmetauscher unabhängige mechanische Behandlung des Produktes durchzuführen. Eine vollständige Trennung der mechanischen und thermischen Behandlung wird dadurch jedoch nicht erreicht, da im Schabewärmetauscher diese beiden Behandlungen nicht getrennt sind.

Der Erfindung liegt die Aufgabe zugrunde, einen Verfahren und eine Vorrichtung zur Herstellung eines Produktes, d.h. eines Milchproduktes, durch Mikrogelierung und/oder Mikropartikulierung eines Ansatzes bereitzustellen, welche Nachteile des Standes der Technik vermeiden, insbesondere wobei bei einer eine mechanische Behandlung und eine Wärmebehandlung umfassenden Mikrogelierung und/oder Mikropartikulierung von auf Filtrationsretentaten basierenden Rezepturen, insbesondere von Molkenproteinen in Ultrafiltrationsmolkenkonzentraten, eine besonders hohe Ausbeute von Partikeln mit hohem Wasserbindungsvermögen und cremige Eigenschaften des Produktes ressourcenschonend ermöglicht werden sollen.

Diese Aufgabe wird durch das Verfahren und die Vorrichtung nach den Patentansprüchen gelöst. Die abhängigen Ansprüche stellen bevorzugte Ausführungsformen der Erfindung dar.

Bei dem erfindungsgemäßen Verfahren (Mikropartikulierungsverfahren) zur Herstellung eines Produktes durch Mikrogelierung und/oder Mikropartikulierung eines Molkenproteine beinhaltenden Ansatzes werden folgende Verfahrensschritte durchgeführt:
- Bereitstellen des Ansatzes, z.B. in einem Tank oder direkt als Filterretentat aus einer Mikrofiltrationsanlage,
- Zuleiten des Ansatzes, z.B. aus dem Tank in ein Dispergiergerät (Dispergiervorrichtung), wobei in dem Dispergiergerät mit einem umlaufenden Rotor der in einen Stator greift, bevorzugt ständig, Scherkräfte zur mechanischen Behandlung des Ansatzes erzeugt werden, und
- Ausleiten des mikrogelierten und mikropartikulierten Produktes aus dem Dispergiergerät. Als Produkt wird der im Dispergiergerät behandelte Ansatz, d.h. der Ansatz nach dessen Behandlung im Dispergiergerät bezeichnet.

Insbesondere wird eine Direktdampferhitzung des Produktes mittels des Dispergiergerätes durchgeführt. Durch den bei der Direktdampferhitzung in das Produkt, bzw. den Ansatz, eingeleiteten Wasserdampf kann eine Verwässerung des Produktes zwischen einem und drei Volumenprozent gegenüber dem Ansatz entstehen.

Erfindungsgemäß wird also durch die Rotor/Stator Anordnung eine Scherung der Partikel im Ansatz durchgeführt und damit eine mechanische Behandlung, d.h. eine Zerkleinerung und/oder ein Stretchen, der Partikel vorgenommen. Eine derartige Dispergiervorrichtung arbeitet mit hohen Scherraten. Bei dem erfindungsgemäßen Verfahren erfolgt die Mikropartikulierung ohne Schaberwärmetauscher mit wesentlich höheren Scherraten als bei den im Stand der Technik bekannten Verfahren.

Dadurch können nicht nur mikropartikulierte Filtrationsretentate hergestellt werden sondern Mikrogele aller Art basierend auf Molkenproteinen. Die Mikrogele können sowohl auf der Basis von Interaktionen von Molkenproteinen, Molkenproteinen und Zuckern als auch von Molkenproteinen und Kasein basiert hergestellt werden. Der Einsatz des Verfahrens ist für eine wesentlich größere Bandbreite von Konzentrationen der Molkenproteine im Ansatz geeignet und auch zur Behandlung fertiger Produktrezepturen anstatt von Zwischenprodukten einsetzbar. Die represäntative Scherrate der bekannten Prozesse mit Schabewärmetauscher liegt in einer Bandbreite von 500/s bis 3000/s. Mit dem beim erfindungsgemäßen Verfahren eingesetzten Dispergiergerät mit Rotor-Stator-System werden erfindungsgemäß Scherraten von über 3000/s bis 5.000.000/s, erzielt. Daher ist das Spektrum an erzielbaren Geleigenschaften, die Arbeitstemperatur sowie die Konzentrationen im Ausgangsstoff ungleich breiter gestreut als bei allen bisher bekannten Verfahren.

Durch das Greifen des Rotors in den Stator wird der Ansatz durch mindestens einen Spalt, bevorzugt mit einer Spaltbreite im Millimeterbereich, d.h. z.B. 1 bis 5 Millimeter, gepresst.

Der Prozeß wird bevorzugt bei Temperaturen von 60°C bis 100°C durchgeführt.
Um Phagenprobleme weitgehend auszuschließen wird bei Verwendung des Mikropartikulats, d.h. des durch das erfindungsgemäße Verfahren hergestellten Produktes, bei zu säuernden Produkten die Temperatur im Bereich über 90°C gehalten.

Unter einem Molkenproteine beinhaltenden Ansatz wird ein Ansatz verstanden bei dem eine wesentliche Menge, d.h. eine ausreichende Konzentration von Molkenproteinen vorhanden ist. Als Ansatz wird eine Rezeptur, d.h. eine Mischung von Zutaten verstanden.
Bei dem erfindungsgemäßen Verfahren zur Mikrogelierung und/oder Mikropartikulierung wird also eine mechanische Behandlungsvorrichtung vorwendet, die als Dispergiervorrichtung mit Rotor und Stator ausgebildet ist.
Die im Bereich des Rotors ausgebildete Dispergierzone ist in der Regel einfach ausreichend, für spezielle Produkte können mehrstufige Dispergierköpfe von Vorteil sein. Mittels der Rotor/Stator Anordnung kann eine nahezu beliebige Zerkleinerung der Partikel im Ansatz erfolgen. Eine von der mechanischen Behandlung unabhängige, d.h. unabhängig steuerbare, thermische Behandlung wird durch die Direktdampferhitzung durchgeführt. Dabei wird Dampf, der bevorzugt aus einem Milchprodukt gewonnen wird, direkt in das Produkt eingeleitet (injiziert). Derart lässt sich eine sehr rasche und vollständige Erwärmung des Produktes zur Einstellung der Größen der Partikel im Produkt durch Agglomerationsprozesse erreichen.

Die direkte Dampferhitzung führt dazu, dass die gesamte Produktmenge gleichzeitig erhitzt wird und nicht wie bei indirekten Erhitzungsverfahren Produkt an der Oberfläche eines Wärmeaustauschs höher thermisch belastet wird als das Produkt in Rohrmitte. Dies führt mit Vorteil zu einer besseren Ausbeute und geringeren Streuung der Partikelgröße.
Einzigartig ist das Verweilzeitverhalten des erfindungsgemäßen Verfahrens im Vergleich zu aus dem Stand der Technik bekannten Verfahren. Durch die gleichzeitige Erhitzung des gesamten Milchstroms und nicht nur des an der Aussenwandung des Wärmetauschers geführten Teilstroms kann die Temperatur in einem wesentlich breiteren Spektrum geführt werden als bei den bekannten Verfahren mit Wärmetauscher. Anbrennungen des Produktes sind dabei ausgeschlossen. Somit können Partikel erzeugt werden, die insbesondere beim Einbau in Käse dessen Schneidfähigkeit nicht negativ beeinflussen. Dies ist ein wesentliches Problem beim vollumfänglichen Einsatz von Mikropartikulaten gemäß Stand der Technik. Die Bandbreite der Konzentration von Molkeproteinen im Ausgangsstoff, d.h. des mit dem erfindungsgemäßen Verfahren zu Mikrogelierenden und/oder zu Mikropartikulierenden Ansatzes, kann beim erfindungsgemäßen Verfahren von 1,5%-30% (Gewichtsprozent), variieren, insbesondere können Ansätze mit über 5 Gewichtsprozent Molkeproteinen verarbeitet werden. Das heißt ein deutlich größeres Spektrum von Ansätzen als bei den bisher bekannten Verfahren kann erfindungsgemäß verarbeitet werden.

Zur Weiterbildung der Erfindung wird der injizierte Dampf wahlweise mit einem Indirektdampferzeuger aus RO-Permeat einer in die Filtrationsanlage des Proteinkonzentrats integrierten RO oder einem anderen aufbereiteten Wasser erzeugt. Der indirekte Dampf kann mit Vorteil den Einsatz in Betrieben ermöglichen, in denen die Dampferzeugung so erfolgt, dass der Dampf nicht direkt in Lebensmittel injiziert werden darf oder sollte.
Das erfindungsgemäße Verfahren ist besonders energiesparend und eine Vorrichtung zur Durchführung des erfindungsgemäßen Verfahrens arbeitet besonders abnutzungsarm. Das erfindungsgemäße Verfahren kann in einer Vorrichtung mit sehr kleinem Anlagevolumen durchgeführt werden, wodurch An- und Abfahrverluste bei der Durchführung des erfindungsgemäßen Verfahrens gegenüber existierenden Verfahren stark reduzierbar sind Das Anlagevolumen kann nur ca. 20% des Anlagenvolumens der bekannten vergleichbaren Systeme betragen. Aufgrund des geringen Anlagevolumens eignet sich das erfindungsgemäße Verfahren insbesondere auch für einen chargenbezogenen Start-Stop Betrieb z. B. bei der Zugabe in Käsefertiger oder in der Eiscremeindustrie. Die Mikropartikulate können beispielsweise bei der Bereitstellung unterschiedlicher Molkeproteingehälter im Rohstoff und unterschiedlicher Erhitzungs- und Scherparameter individuell rezeptoptimiert hergestellt werden.
Bevorzugt durchläuft der Ansatz zwischen dem Tank und dem Dispergiergerät einen Wärmetauscher, insbesondere zur Vorerhitzung auf eine Temperatur zwischen 70 und 90 Grad Celsius, und/oder einen Homogenisator.
Dabei ist eine zusätzliche Wärmebehandlungsvorrichtung, d.h. der Wärmetauscher, stromaufwärts von der mechanischen Behandlungsvorrichtung angeordnet. Hierdurch wird in einem ersten Schritt eine Aggregation der Molkenproteine im Ansatz bewirkt. Erst nachdem dieser Aggregationsvorgang abgeschlossen ist, erfolgt unter sehr präzise und unabhängig vom Erwärmungsvorgang wählbaren Parametern die mechanische Zerkleinerung der Aggregate.

Das Produkt kann vorteilhaft nach dem Ausleiten aus dem Dispergiergerät einen Wärmetauscher und oder einen Kühler durchlaufen. Durch den Wärmetauscher kann eine Heißhaltung des Produktes nach dem Durchlaufen des Dispergiergerätes vorgenommen werden.
Bei dem erfindungsgemäßen Mikropartikulierungsverfahren kann also, wenn die beiden genannten Wärmetauscher als Gegenstromwärmetauscher ausgeführt sind, zusätzlich ein Wärmeaustausch zwischen dem Ansatz, z.B. dem darin enthaltenen Filtrationsretentat, und einem Endprodukt der Mikropartikulierung durchgeführt werden.
Der Wärmetauscher kann als Plattenwärmetauscher für einen Wärmeaustausch zwischen den Filtrationsretentaten am Endprodukt der Mikropartikulierung vorgesehen sein. Durch diese energetisch besonders günstige Variante wird das Filtrationsretentat vor Eintritt in das Dispergiergerät oder in deine sonstige Wärmebehandlungsvorrichtung bereits vorgewärmt, wobei gleichzeitig das Endprodukt der Mikropartikulierung weiter herabgekühlt werden kann. Insbesondere wird mit Vorteil sichergestellt, dass in dem Endprodukt keine weiteren Aggregationsvorgänge unerwünscht ablaufen.

Nach dem Ausleiten des Produktes aus dem Dispergiergerät kann für bestimmte Produkte, z. B. für eine Ricotta Herstellung, eine Heißabfüllung des Produktes erfolgen. Die Heißhaltung kann mit oder ohne Rückführung des Produktes in das Dispergiergerät vorgenommen werden. Insbesondere im Falle der Herstellung eines weiterzuverarbeitenden Zwischenproduktes als Produkt des erfindungsgemäßen Verfahrens kann das Produkt inline ohne Kühlung zu einem weiteren Zwischenprodukt z.B. Käsereimilch zugeführt werden. Auch im Falle der Herstellung eines hochviskosen Produktes kann eine Heißabfüllung ohne Kühlung oder mit nur geringer Kühlung des Produktes nach dem Ausleiten aus dem Dispergiergerät vorteilhaft sein. Das Produkt kann auch direkt nach seinem Austritt aus dem Dispergiergerät auf einen Sprühtrockner oder auf eine Flash-Kühlung geführt werden.

Sehr vorteilhaft durchläuft der Ansatz vor dem Dispergiergerät eine Zuführpumpe und das Produkt nach dem Dispergiergerät durchläuft eine Abführpumpe, wobei über die Drehzahl der Zuführ- und Abführpumpe ein Druckgefälle eingestellt wird.
Eine Anlage, d.h. Vorrichtung, zur Durchführung des erfindungsgemäßen Verfahrens lässt sich im Wesentlichen über drei Parameter exakt einregulieren. Durch die Drehzahlregulierung des Rotors lässt sich die Scherung des Produkts optimieren. Die Temperaturführung ist über ein Dampfregulierventil der Direktdampferhitzung äußerst exakt zu gewährleisten. Durch das Druckgefälle über die Anlage, einstellbar über die Drehzahl der Zuführ- und Abführpumpe lässt sich der Druck in der Vermischungszone bzw. in der Scherzone exakt einstellen.
Man vermeidet durch die exakte Einstellung des Druckgefälles ein Anbrennen des Produkts mit der Folge, dass u.a. die mögliche Betriebsdauer zwischen zwei Reinigungen optimiert ist. Darüber hinaus erfordern insbesondere Temperaturprogramme mit stärkerer Erhitzung in der Regel ein höheres Druckgefälle als schonende Erhitzungsverfahren.

Das erfindungsgemäße Verfahren eignet sich insbesondere zur Mikropartikulierung des Ansatzes, wenn der Ansatz ein Filtrationsretentat, insbesondere ein auf Molkenproteinen basierendes Ultrafiltrationsmolkenkonzentrat, beinhaltet oder daraus besteht.

Derartige Filtrationsretentat können so ohne Qualitätseinbußen insbesondere Milchprodukten zugemischt werden oder Milchprodukte können vollständig daraus hergestellt werden.
Bei dem erfindungsgemäßen Verfahren zur Mikropartikulierung werden die Filtrationsretentate, insbesondere Molkenproteine in Ultrafiltrationsmolkenkonzentraten, eine mechanischer Behandlung und einer Wärmebehandlung (Thermisierungsprozess) unterzogen, wobei die Wärmbehandlung und die mechanische Behandlung räumlich und zeitlich nahezu gleichzeitig auf ein enges Zeitfenster begrenzt erfolgen. Parametereinstellung der Scherung bei der mechanischen Behandlung und des Thermisierungsprozesses werden dabei absolut unabhängig voneinander durchgeführt.

Eine erfindungsgemäße Vorrichtung (Mikropartikulierungsvorrichtung) zur Durchführung des erfindungsgemäßen Verfahrens zur Herstellung eines Produktes durch Mikrogelierung und/oder Mikropartikulierung eines Molkenproteine beinhaltenden Ansatzes weist auf:
- einen Tank zur Bereitstellung des Ansatzes,
- eine Dispergiergerät und ein Leitungssystem zum Zuleiten des Ansatzes aus dem Tank in das Dispergiergerät, wobei das Dispergiergerät eine Dispergierkammer mit einem Rotor und einem Stator aufweist, derart dass in dem Dispergiergerät mit dem umlaufenden Rotor der in einen Stator greift, bevorzugt ständig, Scherkräfte zur mechanischen Behandlung des Ansatzes erzeugbar sind, wobei
- bevorzugt eine Direktdampferhitzung des Produktes vorgesehen ist, bevorzugt wobei das Dispergiergerät eine, bevorzugt von einer Ansatzzuführung getrennte Dampfzuführung zur Direktdampferhitzung des Produktes aufweist, und
- ein Ausleitungssystem zum Ausleiten des mikrogelierten und mikropartikulierten Produktes aus dem Dispergiergerät.

Die Vorrichtung weist erfindungsgemäß eine Regelvorrichtung zum Regulieren eines Dampfstromes der Direktdampferhitzung auf, wobei durch das Regulieren eine kontrollierte Temperaturführung der Direktdampferhitzung des Produktes durchfühbar ist. Die Regelvorrichtung reguliert also den Dampfstrom und lässt eine kontrollierte Temperaturführung zu.

Bei der erfindungsgemäßen Mikropartikulierungsvorrichtung kann die Wärmebehandlungsvorrichtung als Direktdempferhitzung am Dispergiergerät ausgebildet sein. Bei dem Dispergiergerät erzeugt ein umlaufender Rotor der in einen Stator greift ständig Scherkräfte. Durch eine getrennte Dampf und Produktzuführung derart, dass eine Vermischung und somit Aufheizung direkt im Bereich vor der Scherzone erfolgt ist eine optimale Erhitzung ohne Ansatzbildung, d.h. Ablagerungen im Dispergiergerät, gewährleistet. Die Direktdampferhitzung stellt eine Wärmebehandlungsvorrichtung des Ansatzes bzw. des Produktes dar. Dies führt mit Vorteil zu einer sehr effektiven Wärmeübertragung bei geringer thermischer Belastung, insbesondere empfindlicher Produkte, sowie zu deutlich verbesserten Standzeiten gegenüber Vorrichtungen die dem derzeitigen Stand der Technik entsprechen.

Derart ist bei der erfindungsgemäßen Vorrichtung zur mechanischen Behandlung und Wärmebehandlung umfassenden Mikropartikulierung von Filtrationsretentaten, insbesondere von Molkenproteinen in Ultrafiltrationsmolkenkonzentraten, eine separate einstellbare Wärmebehandlungsvorrichtung sowie eine separate regulierbare mechanische Behandlungsvorrichtung in einem kombinierten Gerät, d.h. in dem Dispergiergerät mit Direktdampferhitzung, vorgesehen. Auf diese Weise ist es mit Vorteil möglich, sowohl die Erwärmung als auch die mechanische Behandlung gezielt als voneinander unabhängige Parameter zu variieren. Dadurch lässt sich ein gewünschter Größenbereich der Partikel präzise herstellen. Die Ausbeute von Partikeln innerhalb des optimalen Teilchengrößenspektrums wird somit vorteilhaft verbessert. Dadurch, dass eine separate mechanische Behandlungsvorrichtung vorgesehen ist, kann über einen größeren Bereich als beim Stand der Technik eine gewünschte Partikelgrößeverteilung vorgewählt werden. Weiterhin ist vorteilhaft, dass auf teure Anlagenkomponenten wie Schabewärmetauscher oder Homogenisatoren verzichtet werden kann. Dies erlaubt bei erhöhter Qualität niedrigere Investitions- und Betriebskosten aber auch weniger Wartungszeiten und geringere Wartungskosten.

In spezieller Ausgestaltung der Erfindung weist der Rotor und/oder Stator einen Spaltdurchgang im Bereich von wenigen Millimetern auf. Dies hat den Vorteil, dass sichergestellt wird, dass jegliches Filtrationsretentat, welches durch den Vorrichtung gegangen ist, eine durch die Breite des Spaltdurchgangs und die Scherung vorgegebene maximale Teilchengröße hat.

Um einen besonders breiten Anwendungsbereich der erfindungsgemäßen Mikropartikulierungsvorrichtung zu ermöglichen, ist vorgesehen, dass die Breite des Spaltdurchgangs durch verschiedene Einsätze variabel einstellbar ausgestaltet ist. Unter Beibehaltung der genannten Eigenschaften bezüglich der Teilchengrößenselektion wird auf diese Weise vorteilhaft erreicht, dass der Mittelwert einer engen Teilchengrößenverteilung nach Wahl vor allem bei unterschiedlichen Produkten über einen Bereich verschiebbar ist, der durch die Einstellung der Spaltweite gegeben ist. Hierdurch kann mit Vorteil die erfindungsgemäße Vorrichtung an die Behandlung von Filtrationsretentaten für unterschiedlichste Anwendungen angepasst werden, wodurch die Wirtschaftlichkeit vorteilhaft beeinflusst wird. So Kann auf der gleichen Anlage z. B. Bactofugat erhitzt werden, Ricotta produziert werden, fettarme Eis- oder Joghurtrezepturen erhitzt werden oder eben Mikropartikulat hergestellt werden.

Vorteilhaft ist im Leitungssystem zwischen dem Tank und dem Dispergiergerät ein Wärmetauscher und/oder ein Homogenisator vorgesehen ist, wodurch eine Homogenisierung eventueller Fettanteile des Ansatzes vor der Zuleitung in das Dispergiergerät möglich ist. Dieses Verfahren ist insbesondere im Eiskrem- Joghurt/ Dessertbereich von Vorteil. Eine Homogenisierung ist aber, wenn wie bei Bio Produkten verboten, nicht zwingend erforderlich.

Je nach herzustellendem Produkt kann es vorteilhaft sein, wenn im Ausleitungssystem ein Wärmetauscher und/oder ein Kühler vorgesehen ist. Der Kühler kann sowohl als Vorkühler wie auch als Tiefkühler genutzt werden. Im ersten Fall wird das Produkt sofort weiterverarbeitet, im zweiten Fall wird das Produkt für eine weitere Verarbeitung für einem längerem Zeitraum zwischengelagert Das in der erfindungsgemäßen Vorrichtung hergestellte Produkt, also das Mikrogel/Mikropartikulat kann im Falle der Verwendung des Produktes als ein Zwischenprodukt inline ohne Kühlung zu einem Zwischenprodukt wie z. B. Käsereimilch zugeführt werden. Hochviskose Produkte können ohne oder mit nur geringer Kühlung nach der Herstellung durch das erfindungsgemäße Verfahren heißabgefüllt werden.

Sehr vorteilhaft ist im Leitungssystem vor dem Dispergiergerät eine Zuführpumpe und im Ausleitungssystem nach dem Dispergiergerät eine Abfuhrpumpe vorgesehen, wobei über die Drehzahl der Zuführ- und Abführpumpe ein Druckgefälle einstellbar ist. Die Pumpen zur Zuführung und Abführung können abhängig von der Viskosität der herzustellenden Produkte als Kreisel- oder Verdrängerpumpen ausgeführt sein.

Bevorzugt weist das Ausleitungssystem eine Rohrschleife auf und/oder es ist eine Rezirkulation vorgesehen, wobei eine Verbindung vom Ausleitungssystem zum Leitungssystem zwischen dem Tank und dem Dispergiergerät vorgesehen ist. Durch die Rohrschleife ist eine Verweilstrecke mit einem homogenen Verweilzeitspektrum realisiert die von dem Produkt durchlaufen werden muss.
Die erfindungsgemäße Mikropartikulierungsvorrichtung kann auf spezielle Produkte adaptiert werden, wenn nach der Wärmebehandlungsvorrichtung und der mechanischen Behandlungsvorrichtung eine derartige Verweilstrecke angeordnet ist oder das Produkt über Rezirkulation mehrfach die Anlage durchläuft. Hierdurch kann mit Vorteil der Aggregationsvorgang außerhalb des Dispergiergerätes vollständig zum Abschluss gebracht werden, nachdem die mechanische Zerkleinerung erfolgt ist. Es wird somit mit Vorteil vermieden, dass nach erfolgter mechanischer Zerkleinerung noch weiter eine Aggregation erfolgt, was die gewünschte Größenverteilung unerwünscht verfälschen würde.
Eine besonders günstige Weiterbildung des erfindungsgemäßen Mikropartikulierungsverfahrens erhält man, wenn das Filtrationsretentat in der Verweilstrecke zwischengespeichert wird. Bevorzugt in Kombination mit einer Rezirkulation wird hierdurch mit Vorteil ein Heißhalten des Produktes über eine definierte Zeit auf einem Temperaturniveau nach dem Durchlaufen der Vorrichtung erreicht, um so die Aggregatbildung für einen möglichst hohen Anteil des Retentats abzuschließen.

Die Erfindung wird nachfolgend anhand von Ausführungsbeispielen unter Bezugnahme auf die Zeichnungen näher erläutert.
Die Figur 1 zeigt eine Darstellung des Gesamtaufbaus einer erfindungsgemäßen Mikrogelierungs-/Mikropartikulierungsvorrichtung.
Die Figur 2 zeigt eine Ausführungsform der erfindungsgemäßen Mikropartikulierungsvorrichtung die sich besonders gut für die Käseproduktion eignet.
Die Figur 3 zeigt eine Darstellung einer Ausführungsform der erfindungsgemäßen Mikropartikulierungsvorrichtung mit Heißabfüllung des Produktes.
Die Figur 4 zeigt eine Darstellung eines beim erfindungsgemäßen Verfahren eingesetzten Dispergiergerätes mit Direktdampferhitzung.
Die Figur 5 zeigt eine Darstellung wie der Rotor bei dem Dispergiergerät nach Figur 4 in den Stator greift.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

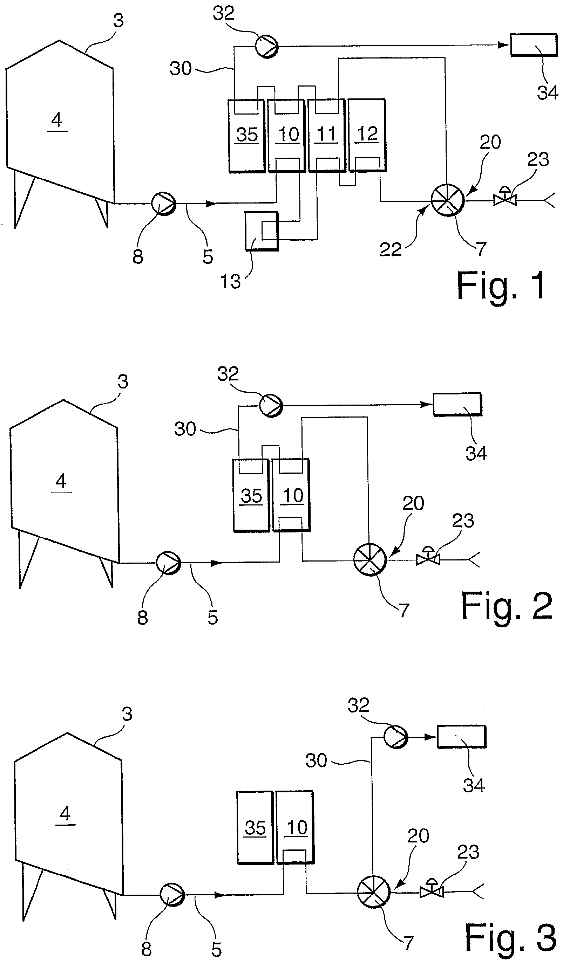

In Figur 1 ist eine Darstellung des Gesamtaufbaus einer erfindungsgemäßen Mikrogelierungs-/Mikropartikulierungsvorrichtung gezeigt. In einem Tank 3 wird ein Molkenproteine beinhaltender Ansatz 4 (Feed) bereitgestellt. Der Ansatz 4 wird aus dem Tank 3 durch ein Leitungssystem 5 in ein Dispergiergerät 7 geleitet. Dabei durchläuft der Ansatz 4 eine Zuführpumpe 8. Zwischen der Zuführpumpe 8 und dem Dispergiergerät 7 sind zwei Wärmetauscher 10,11, ein Erhitzer 12 und ein Homogenisator 13 im Leitungssystem 5 angeordnet die ebenfalls vom Ansatz 4 durchlaufen werden. Die Fließrichtung des Ansatzes ist in der Figur durch eine Pfeilspitze am Leitungssystem 5 symbolisch dargestellt.

Das Dispergiergerät 7 weist eine Dispergierkammer mit einem Rotor und einem Stator auf, derart dass in dem Dispergiergerät 7 mit dem umlaufenden Rotor der in einen Stator greift ständig Scherkräfte auf in dem Ansatz 4 vorhandene Partikel erzeugt werden. Der Rotor und der Stator sind in der Figur lediglich symbolisch durch die sich kreuzenden Linien im Dispergiergerät 7 eingezeichnet.
Am Dispergiergerät 7 ist eine Direktdampferhitzung 20 vorgesehen. Diese Vorrichtung muß nur zur Herstellung bei Ansätzen mit höherer Molkeproteinkonzentration verwendet werden. Dabei weist das Dispergiergerät 7 eine, von einer Ansatzzuführung 22, d.h. einer Einlassöffnung für das Zuführen des Ansatzes 4 in das Dispergiergerät 7, getrennte Dampfzuführung zur Direktdampferhitzung des Produktes auf. Der Dampf für das Betreiben der Direktdampferhitzung 20 wird über ein Regelventil 23 in das Dispergiergerät 7 zugeleitet.
Es ist ein Ausleitungssystem 30 zum Ausleiten des mikrogelierten und mikropartikulierten Produktes aus dem Dispergiergerät 7 vorgesehen. Im Ausleitungssystem 30 ist eine Abfuhrpumpe 32 vorgesehen mittels derer das Produkt zu einem Ziel 34 gepumpt wird. Dieses Ziel 34 ist z.B. als eine Abfüllanlage ausgebildet. Die Lage der Abfuhrpumpe im System ist variabel und abhängig vom Druckabfall der Wärmetauscher. Bei hohen Druckabfällen wird diese idealer weise direkt hinter dem Dispergiergerät sein.
Zwischen dem Dispergiergerät 7 und der Abfuhrpumpe 32 sind zwei Wärmetauscher 10,11 und ein Kühler 35 im Ausleitungssystem 30 angeordnet, die von dem Produkt durchströmt werden. Bei den Wärmetauschern 10,11 handelt es sich um die Wärmetauscher 10,11, die auch vom Ansatz 4 durchströmt werden. Die Wärmetauscher 10,11 werden im Gegenstromverfahren betrieben, so dass eine Wärmeaustausch 10,11 zwischen dem Ansatz 4 und dem mikropartikulierten Produkt erreicht wird.
Aus einem Tank 3 wird das Feed mittels der Zuführpumpe 8 zum Wärmetauscher 10 zugeführt. Im Wärmetauscher 10 wird das Feed mit Hilfe des bereits mikropartikuliertem/-gelierten Produkts vorgewärmt. Je nach Zusammensetzung des Feeds kann eine Homogenisierung im Homogenisator 13 von Vorteil sein. Anschließend wird das Produkt in dem weiteren Wärmetauscher 11 im Gegenstrom auf typischerweise 70-75°C erhitzt. Je nach Zusammensetzung des Feeds wird nun eine Erhitzung auf eine Schertemperatur in dem Erhitzer 12 oder direkt im Dispergiergerät 7, d.h. in dessen Scherkammer, bzw. Dispergierkammer, mittels Direktdampferhitzung 20 über das Regelventil 23, vorgenommen. Die im Dispergiergerät 7 in das Feed eingebrachte Scherung bewirkt die Mikrogelierung/-partikulierung des Ansatzes 4. Wie bereits dargestellt erfolgt eine Abkühlung des Produkts im Gegenstrom in den Wärmetauschern 10,11. Sollte das Produkt nicht inline weiterverarbeitet werden wird es typischerweise über den Kühler 35 abgekühlt. Wichtig ist die Abführpumpe 32. Im Falle eines Gegendrucks hinter dem Dispergiergerät 7 erlaubt die Abführpumpe 32 das exakte Einstellen des Drucks in der Dispergierkammer.
Dieser dargestellte Prozess enthält alle Prozessschritte, bzw. alle Varianten des erfindungsgemäßen Verfahrens, wobei auf bestimmte Anwendungen bezogen immer nur die notwendigen Verfahrensschritte ausgewählt werden. Wesentlich dabei ist das Durchlaufen des Dispergiergerätes 7 und die Direktdampferhitzung 20.

In Figur 2 ist eine Ausführungsform der erfindungsgemäßen Mikropartikulierungsvorrichtung die sich besonders gut für die Käseproduktion eignet dargestellt. Im Unterschied zu der erfindungsgemäßen Vorrichtung gemäß Figur 1 wird in dieser ausführungsform lediglich ein Wärmetauscher 10 im Gegenstromverfahren durchlaufen. Nach Durchlaufen des Wärmetauschers 10 wird ein Kühler 35 vom Produkt durchlaufen. Weiter ist kein Erhitzer vorgesehen, bzw. der Ansatz wird nicht in einem Erhitzer vor dem Durchlaufen des Dispergiergerätes 7 vorgewärmt, und es ist kein Homogenisator und damit keine Homogenisierung des Ansatzes vorgesehen.
Durch die Zugabe eines mikropartikulierten WPC35-60 in den Ansatz kann die Trockenmasse im Käse um mehr als 2% abgesenkt werden und ein deutlich cremigerer Käse hergestellt werden. Die Lage der Abfuhrpumpe im System ist variabel und abhängig vom Druckabfall der Wärmetauscher. Bei hohen Druckabfällen wird diese idealer weise direkt hinter dem Dispergiergerät sein. Die Einstellung der Temperatur am Austritt kann mittels Kühler/nachwärmer 35 erfolgen oder über ein Bypassventil am Wärmetauscher 10.

In Figur 3 ist eine Darstellung einer Ausführungsform der erfindungsgemäßen Mikropartikulierungsvorrichtung mit Heißabfüllung des Produktes gezeigt. Das Verfahren ist auch für die direkte Beschickung von Sprühtrockner geeignet. Im Gegensatz zu den Ausführungsformen gemäß Figur 1 und Figur 2 wird dabei kein Kühler (maximal eine minimale Nachtemperiervorrichtung) von dem Produkt durchlaufen. Wie bei der Ausführungsform gemäß Figur 1 ist das Durchlaufen des Ansatzes 4 durch einen Erhitzer 12 vor dessen Zuleiten in das Dispergiergerät 7 vorgesehen. Diese Variante des erfindungsgemäßen Verfahrens ist beispielsweise zur Herstellung hochviskoser Produkte wie Ricotta geeignet. Die Pumpe 32 ist dabei nicht bei allen Verfahren erforderlich.

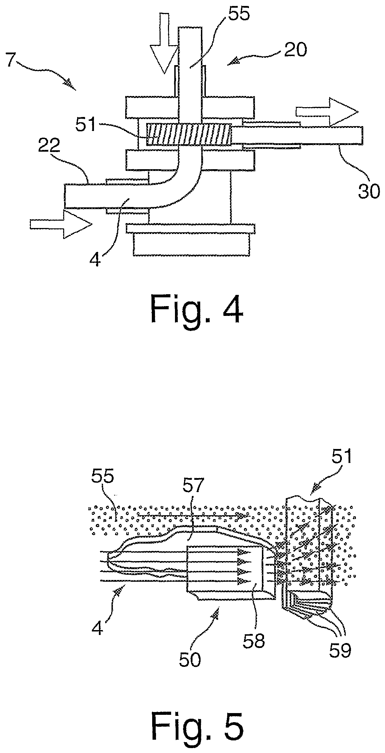

In Figur 4 ist eine Darstellung eines beim erfindungsgemäßen Verfahren eingesetzten Dispergiergerätes 7 mit Direktdampferhitzung 20 gezeigt. Die Direktdampferhitzung 20 wird von einem Einlass ausgebildet durch den Wasserdampf 55 derart in das Dispergiergerät 7 eingeleitet wird, dass er zusammen mit dem, durch eine Ansatzzuführung 22 in das Dispergiergerät 7 eingeleiteten Ansatz 4 mittels des Rotors des Dispergiergerätes 7 durch den Stator 51 des Dispergiergerätes 7 durchgepresst wird. Im Ansatz 4 kondensiert der Wasserdampf 55 dabei aus, so dass das in das Ausleitungssystem 30 aus dem Dispergiergerät 7 ausgeleitete Produkt gegenüber dem Ansatz 4 geringfügig verwässert ist. Die Strömungsrichtungen des Wasserdampfes 55, des Ansatzes 4 und des Produktes sind in der Figur mittels Pfeilen symbolisch dargestellt. Da der Rotor innerhalb des Stators 51 rotiert ist der Rotor in der Figur vom Stator 51 verdeckt und deshalb nicht dargestellt.

In Figur 5 ist eine Darstellung wie der Rotor 50 bei dem Dispergiergerät 7 nach Figur 4 in den Stator 51 greift gezeigt. Auch hier sind die Strömungsrichtungen des Wasserdampfes 55, des Ansatzes 4 und des Produktes durch Pfeile symbolisch dargestellt. Der Rotor 50 ist als eine Platte 57 mit aufgesetztem Zahnkranz 58 ausgebildet. In der Figur ist lediglich ein Abschnitt des Rotors 50 mit einem Zahn 58 gezeigt. Die Rotationsachse des Rotors 50 liegt vertikal verlaufend in der Zeichenebene. Der Stator 51 weist Spalten 59 auf durch die das Ansatz-Wasserdampfgemisch vom Rotor 50 durchgepumpt wird.

Vorgeschlagen wird ein Verfahren zur Herstellung eines Produktes durch Mikrogelierung und/oder Mikropartikulierung eines Molkenproteine beinhaltenden Ansatzes 4 und eine Vorrichtung zur Durchführung des Verfahrens. Das Verfahren weist folgende Verfahrensschritte auf:
- Bereitstellen des Ansatzes 4, bevorzugt in einem Tank 3,
- Zuleiten des Ansatzes 4 in ein Dispergiergerät 7, wobei in dem Dispergiergerät 7 mit einem umlaufenden Rotor der in einen Stator greift ständig Scherkräfte erzeugt werden,
- Direktdampferhitzung 20 des Produktes, bevorzugt mittels einer Direktdampferhitzung 20 am Dispergiergerät 7, bevorzugt auf eine Temperatur zwischen 60 und 100 Grad Celsius, und
- Ausleiten des mikrogelierten und mikropartikulierten Produktes aus dem Dispergiergerät 7.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Herstellung eines Produktes durch Mikrogelierung und/oder Mikropartikulierung eines, bevorzugt 1,5 bis 30, insbesondere über 5 Gewichtsprozent, Molkenproteine beinhaltenden Ansatzes (4) mit den Verfahrensschritten
- Zuleiten des Ansatzes (4) in ein Dispergiergerät (7), wobei in dem Dispergiergerät (7) mit einem umlaufenden Rotor (50) der in einen Stator (51) greift, bevorzugt ständig, zu einer mechanischen Behandlung des Ansatzes Scherkräfte erzeugt werden, und
- Ausleiten des mikrogelierten und mikropartikulierten Produktes aus dem Dispergiergerät (7),
**dadurch gekennzeichnet, dass**
durch den umlaufenden Rotor (50) der in den Stator (51) greift Scherraten über 3000/s bis 5.000.000/s erzeugt werden.

2. Verfahren nach Anspruch 1,
**dadurch gekennzeichnet, dass**
durch das Greifen des Rotors (50) in den Stator (51) der Ansatz durch mindestens einen Spalt (53), bevorzugt mit einer Spaltbreite im Millimeterbereich, gepresst wird.

3. Verfahren nach Anspruch 1 oder 2,
**dadurch gekennzeichnet, dass**
eine Direktdampferhitzung (20) des Produktes bevorzugt auf eine Temperatur zwischen 60 und 100 Grad Celsius vorgenommen wird, bevorzugt wobei die Direktdampferhitzung (20) am Dispergiergerät (7) vorgesehen ist.

4. Verfahren nach Anspruch 3,
**dadurch gekennzeichnet, dass**
durch die Direktdampferhitzung (20) eine Verwässerung des Produktes zwischen einem und zwanzig Volumenprozent gegenüber dem Ansatz (4) entsteht.

5. Verfahren nach einem der Ansprüche 1 bis 4,
**dadurch gekennzeichnet, dass**
der Ansatz (4) vor dem Zuleiten in das Dispergiergerät (7) einen Wärmetauscher (10,11), insbesondere zur Vorerhitzung auf eine Temperatur zwischen 70 und 90 Grad Celsius, und/oder einen Homogenisator (13) durchläuft.

6. Verfahren nach einem der Ansprüche 1 oder 5,
**dadurch gekennzeichnet, dass**
nach dem Ausleiten des Produktes aus dem Dispergiergerät (7) eine Heißabfüllung des Produktes erfolgt, bevorzugt wobei eine Heißhaltung und/oder Sprühtrocknung direkt vorgenommen wird.

7. Verfahren nach einem der Ansprüche 1 bis 6,
**dadurch gekennzeichnet, dass**
der Ansatz (4) vor dem Dispergiergerät (7) eine Zuführpumpe (8) durchläuft und das Produkt nach dem Dispergiergerät (7) eine Abfuhrpumpe (32) durchläuft, wobei über die Drehzahl der Zuführpumpe (8) und Abführpumpe (32) ein Druckgefälle eingestellt wird.

8. Verfahren nach einem der Ansprüche 1 bis 7,
**dadurch gekennzeichnet, dass**
der Ansatz (4) ein Filtrationsretentat, insbesondere ein Molkenproteine beinhaltendes Ultrafiltrationsmolkenkonzentrat, beinhaltet oder daraus besteht.

9. Vorrichtung zur Durchführung des Verfahren zur Herstellung eines Produktes durch Mikrogelierung und/oder Mikropartikulierung eines Molkenproteine beinhaltenden Ansatzes (4) nach einem der Ansprüche 1 bis 8, mit
- einem Dispergiergerät (7) und einem Leitungssystem (5) zum Zuleiten des Ansatzes (4) insbesondere aus einem Tank (3) in das Dispergiergerät (7), wobei das Dispergiergerät (7) eine Dispergierkammer mit einem Rotor und einem Stator aufweist, derart dass in dem Dispergiergerät (7) mit dem umlaufenden Rotor (50) der in einen Stator (51) greift, bevorzugt ständig, Scherkräfte zur mechanischen Behandlung des Ansatzes erzeugbar sind, wobei
- eine Direktdampferhitzung (20) vorgesehen ist, bevorzugt wobei das Dispergiergerät (7) eine, bevorzugt von einer Ansatzzuführung (22) getrennte Dampfzuführung zur Direktdampferhitzung (20) des Produktes aufweist, und
- einem Ausleitungssystem (30) zum Ausleiten des mikrogelierten und mikropartikulierten Produktes aus dem Dispergiergerät (7),
**dadurch gekennzeichnet, dass**
eine Regelvorrichtung zum Regulieren eines Dampfstromes der Direktdampferhitzung (20) vorgesehen ist, wobei durch das Regulieren eine kontrollierte Temperaturführung der Direktdampferhitzung (20) des Produktes durchfühbar ist.

10. Vorrichtung nach Anspruch 9,
**dadurch gekennzeichnet, dass**
im Leitungssystem (5) zwischen dem Tank (3) und dem Dispergiergerät (7) ein Wärmetauscher (10,11) und/oder ein Homogenisator (13) vorgesehen ist.

11. Vorrichtung nach einem der Ansprüche 9 oder 10,
**dadurch gekennzeichnet, dass**
im Ausleitungssystem (30) ein Wärmetauscher (10,11) und/oder ein Kühler (35) vorgesehen ist.

12. Vorrichtung nach einem der Ansprüche 9 bis 11,
**dadurch gekennzeichnet, dass**
im Leitungssystem (5) vor dem Dispergiergerät (7) eine Zuführpumpe (8) und im Ausleitungssystem (30) nach dem Dispergiergerät (7) eine Abfuhrpumpe (32) vorgesehen ist, wobei über die Drehzahl der Zuführpumpe (8) und Abführpumpe (32) ein Druckgefälle einstellbar ist.

13. Vorrichtung nach einem der Ansprüche 9 bis 12,
**dadurch gekennzeichnet, dass**
das Ausleitungssystem (30) eine Rohrschleife aufweist und/oder dass eine Rezirkulation vorgesehen ist, wobei eine Verbindung vom Ausleitungssystem (30) zum Leitungssystem (5) zwischen dem Tank (3) und dem Dispergiergerät (7) vorgesehen ist.

## Claims

1. Method for producing a product by micro-gelling and/or micro-particulating a preparation (4) containing preferably 1.5 to 30, in particular over 5, percent by weight whey proteins, comprising the method steps of
- feeding the preparation (4) into a dispersing device (7), wherein in the dispersing device (7) shearing forces are generated, preferably continuously, by a rotating rotor (50) that engages in a stator (51), for a mechanical treatment of the preparation, and
- discharging the micro-gelled and micro-particulated product out of the dispersing device (7),
**characterized in that**
shearing rates of over 3000/s to 5 000 000/s are generated by the rotating rotor (50) that engages in the stator (51).

2. Method according to Claim 1,
**characterized in that**
the engaging of the rotor (50) in the stator (51) has the effect that the preparation is forced through at least one gap (53), preferably with a gap width in the millimetre range.

3. Method according to Claim 1 or 2,
**characterized in that**
direct vapour heating (20) of the product is performed, preferably to a temperature between 60 and 100 degrees Celsius, the direct vapour heating (20) preferably being provided at the dispersing device (7).

4. Method according to Claim 3,
**characterized in that**
a dilution of the product of between one and twenty percent by volume with respect to the preparation (4) is produced by the direct vapour heating (20).

5. Method according to one of Claims 1 to 4,
**characterized in that**
before being fed into the dispersing device (7), the preparation (4) passes through a heat exchanger (10, 11), in particular for preheating to a temperature between 70 and 90 degrees Celsius, and/or a homogenizer (13).

6. Method according to one of Claims 1 or 5,
**characterized in that**
after the product has been discharged from the dispersing device (7), hot-filling of the product takes place, preferably with maintenance of the heated temperature and/or spray-drying being performed directly.

7. Method according to one of Claims 1 to 6,
**characterized in that**
upstream of the dispersing device (7) the preparation (4) passes through a feed pump (8) and downstream of the dispersing device (7) the product passes through a discharge pump (32), a pressure gradient being adjusted by means of the rotational speed of the feed pump (8) and the discharge pump (32).

8. Method according to one of Claims 1 to 7,
**characterized in that**
the preparation (4) contains or consists of a filtration retentate, in particular an ultrafiltration whey concentrate containing whey proteins.

9. Apparatus for carrying out the method for producing a product by micro-gelling and/or micro-particulating a preparation (4) containing whey proteins according to one of Claims 1 to 8, comprising
- a dispersing device (7) and a piping system (5) for feeding the preparation (4) in particular from a tank (3) into the dispersing device (7), the dispersing device (7) having a dispersing chamber with a rotor and a stator in such a way that in the dispersing device (7) shearing forces can be generated, preferably continuously, by the rotating rotor (50) that engages in a stator (51), for the mechanical treatment of the preparation, wherein
- a direct vapour heating (20) is provided, preferably wherein the dispersing device (7) has a vapour feed, which is preferably separate from a preparation feed (22), for the direct vapour heating (20) of the product, and
- a discharge system (30) for discharging the micro-gelled and micro-particulated product from the dispersing device (7),
**characterized in that**
a control device for regulating a vapour stream of the direct vapour heating (20) is provided, the regulating allowing a managed temperature control of the direct vapour heating (20) of the product to be carried out.

10. Apparatus according to Claim 9,
**characterized in that**
a heat exchanger (10, 11) and/or a homogenizer (13) is provided in the piping system (5) between the tank (3) and the dispersing device (7).

11. Apparatus according to either of Claims 9 and 10,
**characterized in that**
a heat exchanger (10, 11) and/or a cooler (35) is provided in the discharge system (30).

12. Apparatus according to one of Claims 9 to 11,
**characterized in that**
a feed pump (8) is provided upstream of the dispersing device (7) in the piping system (5) and a discharge pump (32) is provided downstream of the dispersing device (7) in the discharge system (30), a pressure gradient being adjustable by means of the rotational speed of the feed pump (8) and the discharge pump (32).

13. Apparatus according to one of Claims 9 to 12,
**characterized in that**
the discharge system (30) has a pipe loop and/or **in that** a recirculation is provided, a connection from the discharge system (30) to the piping system (5) being provided between the tank (3) and the dispersing device (7).

## Revendications

1. Procédé de fabrication d'un produit par microgélification et/ou microparticulation d'une préparation (4) contenant de préférence 1,5 à 30, en particulier plus de 5 pour cent en poids de protéines de lactosérum, comprenant les étapes :
- amenée de la préparation (4) dans un appareil disperseur (7), dans lequel appareil disperseur (7) des forces de cisaillement pour un traitement mécanique de la préparation sont produites, de préférence en permanence, par un rotor (50) tournant qui s'engage dans un stator (51), et
- évacuation du produit microgélifié et microparticulaire de l'appareil disperseur (7),
**caractérisé en ce**
**que** le rotor (50) tournant qui s'engage dans le stator (51) produit des forces de cisaillement allant de plus de 3 000/s à 5 000 000/s.

2. Procédé selon la revendication 1,
**caractérisé en ce**
**que** du fait de l'engagement du rotor (50) dans le stator (51), la préparation est pressée à travers au moins une fente (53), de préférence ayant une largeur de fente de l'ordre du millimètre.

3. Procédé selon la revendication 1 ou 2,
**caractérisé en ce**
**qu'**un chauffage direct à la vapeur (20) du produit, de préférence à une température comprise entre 60 et 100 degrés Celsius, est effectué, le chauffage direct à la vapeur (20) étant de préférence prévu sur l'appareil disperseur (7).

4. Procédé selon la revendication 3,
**caractérisé en ce**
**que** du fait du chauffage direct à la vapeur (20), il se produit une dilution du produit entre un et vingt pour cent en volume par rapport à la préparation (4).

5. Procédé selon l'une des revendications 1 à 4,
**caractérisé en ce**
**qu'**avant son amenée dans l'appareil disperseur (7), la préparation (4) traverse un échangeur de chaleur (10, 11), en particulier pour un préchauffage à une température comprise entre 70 et 90 degrés Celsius, et/ou un homogénéisateur (13).

6. Procédé selon l'une des revendications 1 ou 5,
**caractérisé en ce**
**qu'**après l'évacuation du produit de l'appareil disperseur (7), un remplissage à chaud du produit est effectué, de préférence un maintien en température et/ou un séchage par pulvérisation étant directement effectués.

7. Procédé selon l'une des revendications 1 à 6,
**caractérisé en ce**
**que** la préparation (4) avant l'appareil disperseur (7) traverse une pompe d'alimentation (8) et le produit après l'appareil disperseur (7) une pompe d'extraction (32), une différence de pression étant réglée par la vitesse de rotation de la pompe d'alimentation (8) et de la pompe d'extraction (32).

8. Procédé selon l'une des revendications 1 à 7,
**caractérisé en ce**
**que** la préparation (4) contient ou est constituée d'un rétentat de filtration, en particulier d'un concentré de lactosérum obtenu par ultrafiltration contenant des protéines de lactosérum.

9. Dispositif pour mettre en oeuvre le procédé de fabrication d'un produit par microgélification et/ou microparticulation d'une préparation (4) contenant des protéines de lactosérum selon l'une des revendications 1 à 8, comprenant
- un appareil disperseur (7) et un système de canalisation (5) pour amener la préparation (4), en particulier à partir d'un réservoir (3), dans l'appareil disperseur (7), l'appareil disperseur (7) présentant une chambre de dispersion avec un rotor et un stator, de façon que, dans l'appareil disperseur (7), des forces de cisaillement pour un traitement mécanique de la préparation puissent être produites, de préférence en permanence, par le rotor (50) tournant qui s'engage dans le stator (51),
- un chauffage direct à la vapeur (20) étant prévu, l'appareil disperseur (7) présentant de préférence une amenée de vapeur séparée d'une amenée de préparation (22) pour le chauffage direct à la vapeur (20) du produit, et
- un système d'évacuation (30) pour évacuer le produit microgélifié et microparticulaire de l'appareil disperseur (7),
**caractérisé en ce**
**qu'**un dispositif de régulation pour réguler le flux de vapeur du chauffage direct à la vapeur (20) est prévu, la régulation permettant de réaliser un réglage de température contrôlé du chauffage direct à la vapeur (20) du produit.

10. Dispositif selon la revendication 9,
**caractérisé en ce**
**qu'**un échangeur de chaleur (10, 11) et/ou un homogénéisateur (13) sont prévus dans le système de canalisation (5) entre le réservoir (3) et l'appareil disperseur (7).

11. Dispositif selon l'une des revendications 9 ou 10,
**caractérisé en ce**
**qu'**un échangeur de chaleur (10, 11) et/ou un refroidisseur (35) sont prévus dans le système d'évacuation (30).

12. Dispositif selon l'une des revendications 9 à 11,
**caractérisé en ce**
**qu'**une pompe d'alimentation (8) est prévue dans le système de canalisation (5) avant l'appareil disperseur (7) et une pompe d'extraction (32) dans le système d'évacuation (30) après l'appareil disperseur (7), une différence de pression étant réglable par la vitesse de rotation de la pompe d'alimentation (8) et de la pompe d'extraction (32).

13. Dispositif selon l'une des revendications 9 à 12,
**caractérisé en ce**
**que** le système d'extraction (30) présente une boucle de tuyauterie et/ou qu'une recirculation est prévue, une communication du système d'extraction (30) avec le système de canalisation (5) étant prévue entre le réservoir (3) et l'appareil disperseur (7).
